# EUROPEAN PATENT SPECIFICATION

(11) **EP 1 713 205 B1**
(45) Date of publication and mention of the grant of the patent: **13.06.2007**
(21) Application number: 05103026.0
(22) Date of filing: 15.04.2005
(51) Int. Cl.: H04L 12/28

(54) **Controlling connectivity of a wireless smart card reader**
Überprüfung der Verbindung eines drahtlosen Smartkartenlesers
Contrôle de la connectivité d'un lecteur de carte à puce sans fil

(43) Date of publication of application: 18.10.2006
(73) Proprietor: Research In Motion Limited, Waterloo, Ontario N2L 3W8 (CA)
(72) Inventor: Brown, Michael K., Kitchener Ontario N2M 2Z2 (CA); Little, Herb, Waterloo Ontario N2T 2V8 (CA); Adams, Neil, Waterloo Ontario N2K 4E4 (CA)
(74) Representative: Rickard, David John

(56) References cited:
- WO-A-20/04012352
- US-A1- 2003 183 691
- US-A1- 2004 188 519
- US-B1- 6 424 947

## Description

Smart cards are personalized security devices, defined by the IS07816 standard and its derivatives, as published by the International Organization for Standardization. A smart card may have a form factor of a credit card and may include a semiconductor device. The semiconductor device may include a memory that can be programmed with security information (e.g., a private decryption key, a private signing key, biometrics, etc.) and may include a processor and/or dedicated logic, for example, dedicated decryption logic and/or dedicated signing logic. A smart card may include a connector for powering the semiconductor device and performing serial communication with an external device. Alternatively, smart card functionality may be embedded in a device having a different form factor and different communication protocol, for example a Universal Serial Bus (USB) device.
[0001a] US2003/183691 discloses a smart card reader that comprises a short-range communications part for communicating information using a RF wireless method between the smart card reader and a wireless communications terminal external to it. The communications between the wireless communications terminal and the smart card reader use the well known master-slave principle. The wireless communications terminal controls its own connection with the smart card reader but does not control other connections of the smart card reader.
[0001b] WO2004/012352 discloses a wireless mobile device that includes a contactless smart card reader. The smart card reader is electrically connected to the wireless mobile device. The contactless smart card reader is able to communicate with smart cards that are positioned in close proximity to the mobile device. The smart card reader is adapted to receive and read information stored in a contactless smart card and transmit this information to an entity through the wireless mobile device and a wireless network. The mobile device is electrically connected to the contactless smart card reader, not connected wirelessly to a wireless-enabled smart card reader.

### GENERAL

Access to security information stored on a smart card is controlled by the processor and/or dedicated logic on the smart card. A smart card reader communicates with the processor and/or dedicated logic in order to access the security information stored on the smart card. It may be prudent, therefore, to ensure that access to the smart card reader (with the smart card inserted therein) is controlled.
[0002a] In a main aspect, the present invention provides a method comprising: controlling, using a mobile device that is connected wirelessly to a wireless-enabled smart card reader in order to access a smart card, connections of said smart card reader with other devices.

### BRIEF DESCRIPTION OF THE DRAWINGS

Embodiments of the invention are illustrated by way of example and not limitation in the figures of the accompanying drawings, in which like reference numerals indicate corresponding, analogous or similar elements, and in which:

FIG. 1 is a schematic illustration of a system including a wireless-enabled smart card reader and other devices, according to some embodiments of the invention;

FIG. 2 is a flowchart illustration of a method to be implemented in the system of FIG. 1, according to some embodiments of the invention;

FIG. 3 is a schematic illustration of a system including a wireless-enabled smart card reader and other devices, according to other embodiments of the invention;

FIG. 4 is a flowchart illustration of a method to be implemented in the system of FIG. 3, according to some embodiments of the invention; and

FIG. 5 is a block diagram of the smart card reader and mobile device of FIG. 1 or FIG. 3, according to some embodiments of the invention.

It will be appreciated that for simplicity and clarity of illustration, elements shown in the figures have not necessarily been drawn to scale. For example, the dimensions of some of the elements may be exaggerated relative to other elements for clarity.

### DESCRIPTION OF PREFERRED EMBODIMENTS

In the following detailed description, numerous specific details are set forth in order to provide a thorough understanding of embodiments of the invention. However it will be understood by those of ordinary skill in the art that the embodiments of the invention may be practiced without these specific details. In other instances, well-known methods, procedures, components and circuits have not been described in detail so as not to obscure the embodiments of the invention.

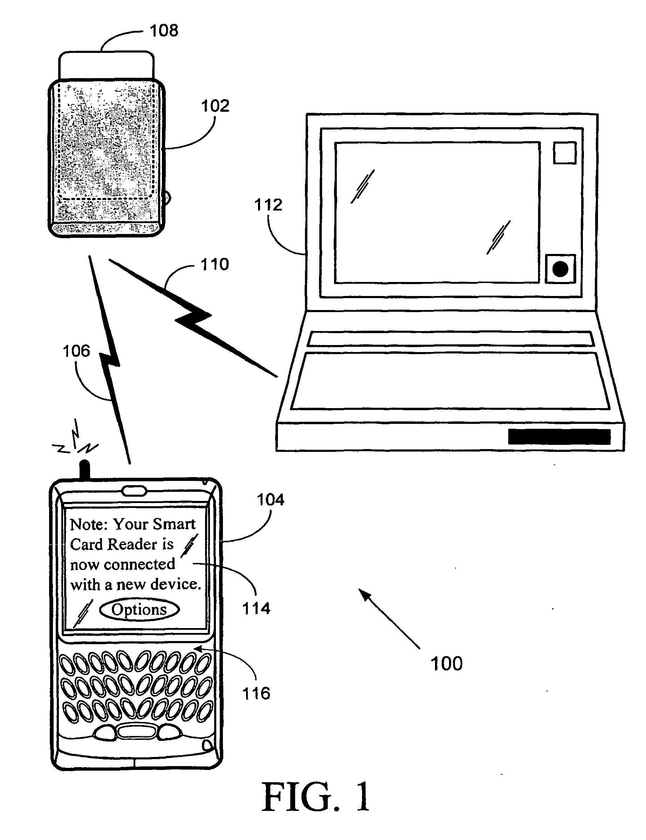

Figure 1 is a schematic diagram of an exemplary system, according to some embodiments of the invention. A system 100 includes a wireless smart card reader 102 and a mobile device 104. Smart card reader 102 and mobile device 104 are able to communicate over a wireless communication link 106. A non-exhaustive list of examples of wireless local area network standards for wireless communication link 106 includes the Institute of Electrical and Electronic Engineers (IEEE) for Wireless LAN MAC and Physical layer (PHY) 802.11 a, b, g and n specifications or future related standards, the Bluetooth® standard, the Zigbee^{™} standard and the like.

A smart card 108 is shown inserted into smart card reader 102. The person whose security information is stored on smart card 108, and is therefore the rightful user of smart card reader 102, may use smart card reader 102 for identification, to unlock mobile device 104, and to digitally sign and/or decrypt messages sent by mobile device 104. Smart card 108 may also include a random number generator.

For example, mobile device 104 may be able to send and receive e-mail messages via an e-mail server (not shown). If, for example, the Secure Multipurpose Internet Mail Extensions (S/MIME) protocol is used, e-mail messages received at mobile device 104 are encrypted using a symmetric algorithm with a random message key generated by the sender of the e-mail message. The e-mail message also includes the message key, encrypted using the public key of the recipient. Upon receipt of an encrypted e-mail message, mobile device 104 may extract the encrypted message key and send it to smart card reader 102 via communication link 106. Smart card reader 102 may send the encrypted message key to smart card 108, and the decryption engine of smart card 108 may decrypt the encrypted message key using the recipient's private decryption key, which is stored in smart card 108. Smart card reader 102 may retrieve the decrypted message key from smart card 108 and forward it to mobile device 104 via communication link 106 so that mobile device 104 can decrypt the received e-mail message. The smart card 108 may prevent unauthorized use of the recipient's private decryption key by requiring that a password or personal identification number (PIN) be supplied before allowing the decryption operation to proceed.

Similarly, to add a digital signature to an e-mail message being sent by mobile device 104, mobile device 104 may send a hash of the contents of the e-mail message to smart card reader 102 over communication link 106. Smart card reader 102 may pass the hash to smart card 108, which may produce a digital signature from the hash and the sender's private signing key, which is stored in smart card 108. Smart card 108 may then pass the digital signature to smart card reader 102, which may forward it to mobile device 104 via communication link 106 so that mobile device 104 can transmit it along with the e-mail message to the e-mail server. Again, smart card 108 may prevent unauthorized use of the recipient's private signing key by requiring that a password or PIN be supplied before allowing the signing operation to proceed.

The unencrypted message key should be sent securely over communication link 106 from smart card reader 102 to mobile device 104 to prevent a third party from retrieving the message key from communication link 106. Similarly, the hash to be signed should be sent authentically over communication link 106 from smart card reader 102 to mobile device 104 to prevent a third party from modifying the hash and thereby causing smart card 108 to produce a signature using a hash different from the hash of the intended message. Therefore communication link 106 may need to be secured using cryptographic techniques.

The person whose security information is stored on smart card 108 may also wish to digitally sign outgoing e-mail sent from a personal computer (not shown) or to decrypt incoming encrypted e-mail received at the personal computer. This will require the personal computer to communicate with smart card reader 102 in much the same way as mobile device 104 communicates with smart card reader 102 as described above. For this purpose, or for other security-related measures (e.g. to permit the person to unlock the personal computer), the communication link between the personal computer and smart card reader 102 may need to be secured using cryptographic techniques.

Smart card reader 102 may be able to maintain dual wireless connections concurrently, one connection to mobile device 104 and another to the personal computer. However, if an attacker were to steal smart card reader 102, establish a wireless connection between smart card reader 102 and another device, and return smart card reader 102 to its rightful user, then as long as smart card reader 102 is within range of the other device, the attacker would have access to smart card reader 102 and smart card 108 without the rightful user of smart card reader 102 being aware of this. Another possibility is that the attacker, having stolen smart card reader 102, could pair smart card reader 102 with the other device in such a way as to facilitate establishment of a wireless connection between smart card reader 102 and the other device, and then return smart card reader 102 to its rightful user. The pairing may occur in a manner that is not wireless, for example, using a USB cable to connect smart card reader 102 briefly to the other device. Once the pairing is complete, the USB cable may be removed, smart card reader 102 may be returned to its rightful user, and a wireless connection between smart card reader 102 and the other device may exist as long as smart card reader 102 is within range of the other device.

One way to handle this potential security issue is to restrict to one the number of wireless connections that smart card reader 102 can make at any given time. In that case, if an attacker establishes a wireless connection 110 between smart card reader 102 and another device, for example, a personal computer 112 belonging to the attacker, the rightful user of smart card reader 102 will be unable to establish a wireless connection between smart card reader 102 and mobile device 104 and will therefore be aware that something is wrong. At this point, the rightful user could repair mobile device 104 and smart card reader 102, thereby removing the existing wireless connection between smart card reader 102 and the other device. Alternatively, the rightful user may notify an administrator of the problem.

Another way to handle this potential security issue is to control the connectivity of smart card reader 102 via mobile device 104 while still enabling smart card reader 102 to maintain more than one wireless connection at a time.

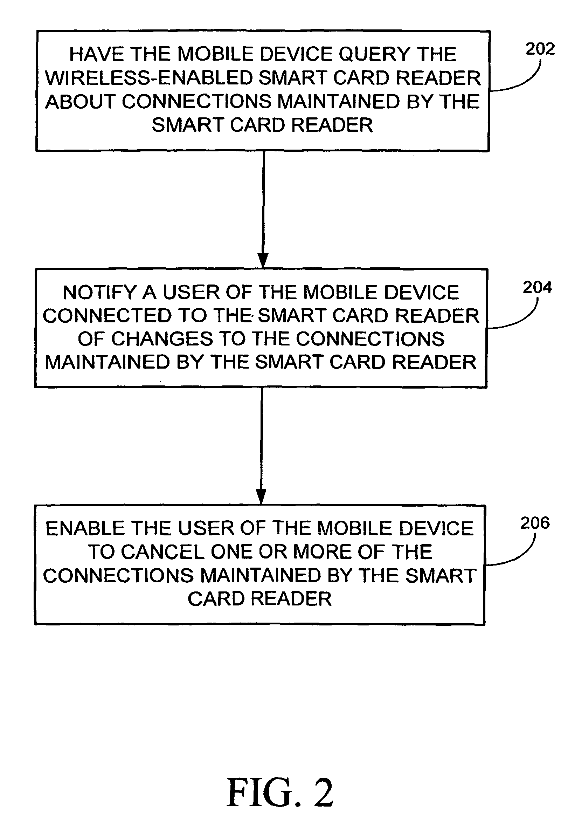

For example, as shown in Figure 1 and Figure 2, mobile device 104 may query smart card reader 102 from time to time about any other wireless connections currently maintained by smart card reader 102 (202). Mobile device 104 may show on its display 114 a notification if the information about other wireless connections changes (204). For example, if a new wireless connection is established between smart card reader 102 and another device, display 114 may show a notification such as "Note: Your Smart Card Reader is now connected with a new device". The user may then have the option to review current wireless connections maintained by smart card reader 102 and optionally cancel one or more of the connections (206). Canceling a connection may result in the deletion of pairing keys for that connection.

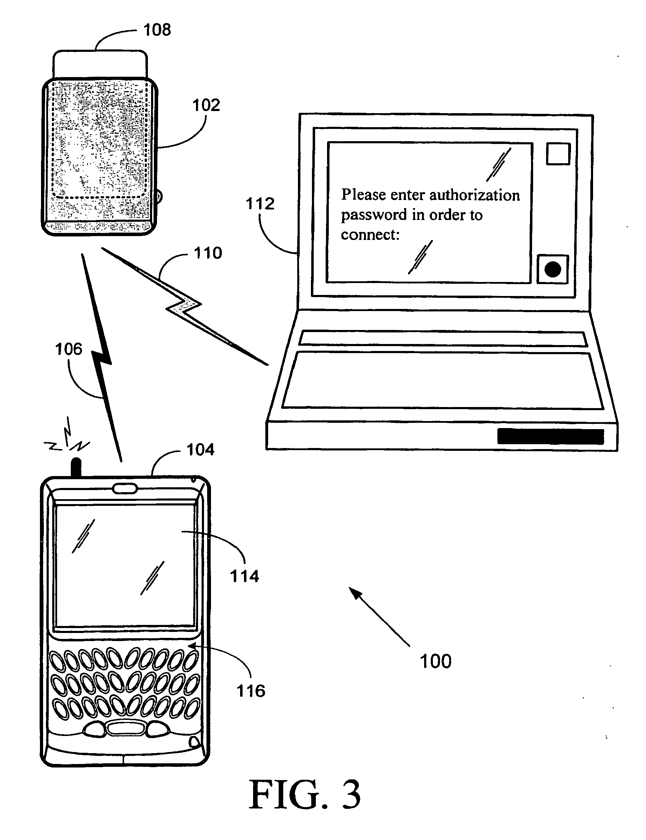

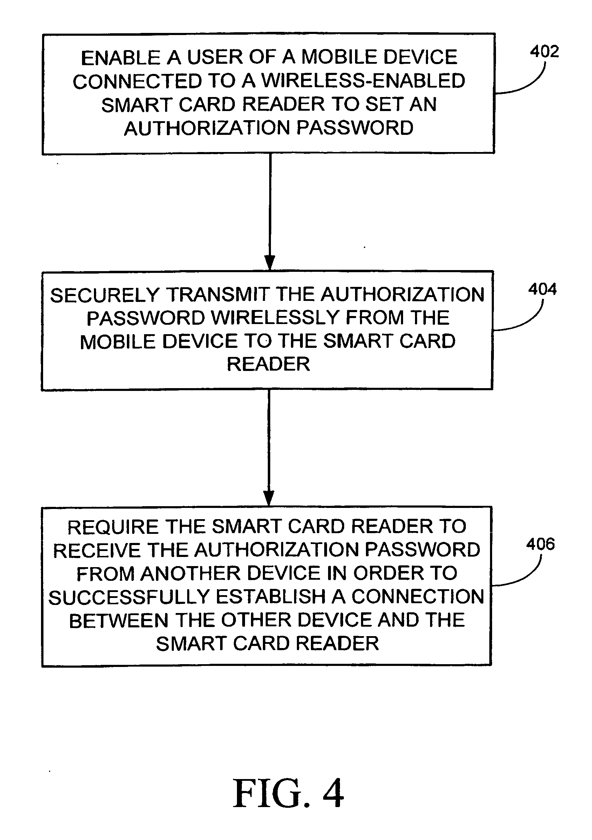

In another example, as shown in Figure 3 and Figure 4, mobile device 104 may enable its user to set, via an input component, for example a keyboard 116, an authorization password for subsequent connections to smart card reader 102 (402). Mobile device 104 could send the authorization password securely over communication link 106 to smart card reader 102 (404), and then all subsequent attempts to connect, either wirelessly or via a wired connection, for example a USB cable, to smart card reader 102 will lead to the user of the device trying to connect to smart card reader 102 being prompted for the authorization password (406). If an attacker steals smart card reader 102 and attempts to establish a connection between smart card reader 102 and another device, the attacker will be required to enter the authorization password at the other device in order for the connection to be established successfully (406).

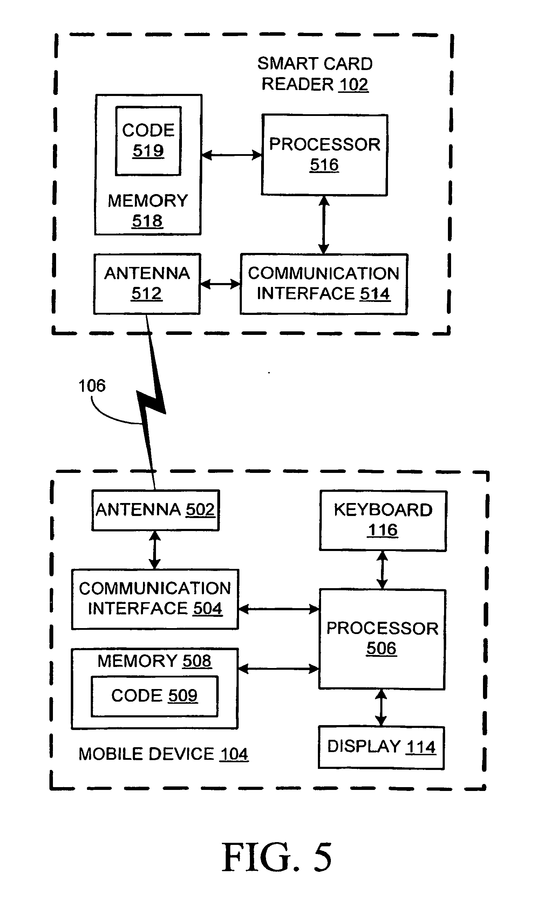

Figure 5 is a block diagram of portions of system 100, according to some embodiments of the invention. For clarity, some components of mobile device 104 and smart card reader 102 are not shown in Figure 5 and are not described explicitly below.

Mobile device 104 includes an antenna 502 and smart card reader 102 includes an antenna 512. A non-exhaustive list of examples for antennae 502 and 512 includes dipole antennae, monopole antennae, multilayer ceramic antennae, planar inverted-F antennae, loop antennae, shot antennae, dual antennae, omnidirectional antenna and any other suitable antennae.

Mobile device 104 also includes a communication interface 504 coupled to antenna 502. Smart card reader 102 includes a communication interface 514 coupled to antenna 512. A non-exhaustive list of examples for standards with which communication interfaces 504 and 514 may be compatible includes 802.11 a, b, g and n and future related standards, the Bluetooth® standard, the Zigbee^{™} standard and the like.

Mobile device 104 also includes a processor 506 coupled to communication interface 504, to display 114 and to keyboard 116. Mobile device 104 also includes a memory 508, which may be fixed in or removable from mobile device 104. Memory 508 may be coupled to processor 506 or partly embedded in processor 506. Communication interface 504 and processor 506 may be part of the same integrated circuit or in separate integrated circuits. Similarly, processor 506 and memory 508 may be part of the same integrated circuit or in separate integrated circuits.

Smart card reader 102 also includes a processor 516 coupled to communication interface 514. Smart card reader 102 also includes a memory 518, which may be fixed in or removable from smart card reader 102. Memory 518 may be coupled to processor 516 or partly embedded in processor 516. Communication interface 514 and processor 516 may be part of the same integrated circuit or in separate integrated circuits. Similarly, processor 516 and memory 518 may be part of the same integrated circuit or in separate integrated circuits.

A non-exhaustive list of examples for processors 506 and 516 includes a central processing unit (CPU), a digital signal processor (DSP), a reduced instruction set computer (RISC), a complex instruction set computer (CISC) and the like. Furthermore, processors 506 and 516 may be part of an application specific integrated circuit (ASIC) or may be a part of an application specific standard product (ASSP).

A non-exhaustive list of examples for memories 508 and 518 includes any combination of the following:
a) semiconductor devices such as registers, latches, read only memory (ROM), mask ROM, electrically erasable programmable read only memory devices (EEPROM), flash memory devices, non-volatile random access memory devices (NVRAM), synchronous dynamic random access memory (SDRAM) devices, RAMBUS dynamic random access memory (RDRAM) devices, double data rate (DDR) memory devices, static random access memory (SRAM), universal serial bus (USB) removable memory, and the like;
b) optical devices, such as compact disk read only memory (CD ROM), and the like; and
c) magnetic devices, such as a hard disk, a floppy disk, a magnetic tape, and the like.

Memory 508 may store executable code 509 which, when executed by processor 506, may cause mobile device 104 to implement relevant portions of any or a combination of the methods of Figures 2 and 4.

Memory 518 may store executable code 519 which, when executed by processor 516, may cause smart card reader 102 to implement relevant portions of any or a combination of the methods of Figures 2 and 4.

While certain features of the invention have been illustrated and described herein, many modifications, substitutions, changes, and equivalents will now occur to those of ordinary skill in the art. It is, therefore, to be understood that the appended claims are intended to cover all such modifications and changes.

### COPYRIGHT NOTICE

A portion of the disclosure of this patent document contains material which is subject to copyright protection. The copyright owner has no objection to the facsimile reproduction by anyone of the patent document or patent disclosure, as it appears in the Patent and Trademark Office patent file or records, but otherwise reserves all copyright rights whatsoever.

## Claims

1. A method comprising:
controlling, using a mobile device (104) that is connected wirelessly to a wireless-enabled smart card reader (102) in order to access a smart card (108), connections of said smart card reader (102) with other devices (112).

2. The method of claim 1, wherein controlling said connections comprises:
querying said smart card reader (102) about said connections; and
notifying a user of said mobile device (104) of changes to said connections.

3. The method of claim 2, further comprising:
enabling said user to cancel one or more of said connections.

4. The method of any one of claims 1 to 3, wherein controlling said connections comprises:
enabling a user of said mobile device (104) to set an authorization password;
securely transmitting said authorization password wirelessly from said mobile device (104) to said smart card reader (102); and
requiring said smart card reader (102) to receive said authorization password from one of said other devices (112) in order to successfully establish a connection between said one of said other devices (112) and said smart card reader (102).

5. A system comprising:
a wireless-enabled smart card reader (102) able to be coupled to a smart card (108) and able to be connected concurrently to at least two devices; and
a mobile device (104) able to be connected wirelessly to said smart card reader (102) in order to access said smart card (108) and able to control connections of said smart card reader (102) to other devices (112).

6. The system of claim 5, wherein said mobile device (104) has a display (114), and said mobile device (104) is arranged to query said smart card reader (102) about said connections and to notify a user of said mobile device (104) via said display (114) of changes to said connections.

7. The system of claim 6, wherein said mobile device (104) is arranged to enable said user to cancel one or more of said connections.

8. The system of claim 5, wherein said mobile device (104) is arranged to enable a user of said mobile device (104) to set an authorization password and is arranged to securely transmit said authorization password wirelessly to said smart card reader (102), and wherein said smart card reader (102) is arranged to require said authorization password from one of said other devices (112) in order to successfully establish a connection between said one of said other devices (112) and said smart card reader (102).

9. A mobile device (104) comprising:
a communication interface (504) compatible with a wireless communication standard through which said mobile device (104) is able to be connected wirelessly to a wireless-enabled smart card reader (102) in order to access a smart card (108);
a processor (506); and
a memory (508) to store executable code means (509) which, when executed by said processor (506), is arranged to control connections of said smart card reader (102) to other devices (112).

10. The mobile device (104) of claim 9, further comprising:
a display (114),
wherein said executable code means (509), when executed by said processor (506), queries said smart card reader (102) about said connections and notifies a user of said mobile device (104) via said display (114) of changes to said connections.

11. The mobile device of claim 10, wherein said executable code means (509), when executed by said processor (506), enables said user to cancel one or more of said connections.

12. The mobile device (104) of any one of claims 9 to 11, further comprising:
an input component (116),
wherein said executable code means (509), when executed by said processor (506), enables a user of said mobile device (104) to set an authorization password via said input component (116) for said connections to said smart card reader (102) and securely transmits said authorization password to said smart card reader (102) via said communication interface (504).

13. The mobile device (104) of any one of claims 9 to 12, wherein said wireless communication standard is the Bluetooth® standard.

14. A machine readable medium (508) comprising program code means which when being executed by a processor (506) of the mobile device (104) of any one of claims 9 to 13 causes said mobile device to perform the method of any one of claims 1 to 4.

## Patentansprüche

1. Ein Verfahren, umfassend:
das Steuern mittels eines mobilen Geräts (104), das für den Zugriff auf eine Chipkarte (108) drahtlos mit einem für die drahtlose Datenübertragung geeigneten Chipkartenleser (102) verbunden ist, von Verbindungen des Chipkartenlesers (102) mit anderen Geräten (112).

2. Das Verfahren gemäß Anspruch 1, wobei das Steuern der Verbindungen umfasst:
das Abfragen des Chipkartenlesers (102) bezüglich der Verbindungen; und
das Beanachrichtigen eines Benutzers des mobilen Geräts (104) über Änderungen der Verbindungen.

3. Das Verfahren gemäß Anspruch 2, weiter umfassend:
das Bereitstellen der Möglichkeit für den Benutzer, eine oder mehrere der Verbindungen abzubrechen.

4. Das Verfahren gemäß jedem der Ansprüche 1 bis 3, wobei die Steuerung der Verbindungen umfasst:
das Bereitstellen der Möglichkeit für einen Benutzer des mobilen Geräts (104), ein Authentisierungskennwort festzulegen;
das sichere Übermitteln des Authentisierungskennwerts über eine drahtlose Verbindung vom mobilen Gerät (104) an den Chipkartenleser (102); und
das Auffordern des Chipkartenlesers (102), das Authentisierungskennwort von einem der anderen Geräte (112) zu empfangen, um eine Verbindung zwischen dem einen der anderen Geräte (112) und dem Chipkartenleser (102) erfolgreich herzustellen.

5. Ein System, umfassend:
einen für die drahtlose Datenübertragung geeigneten Chipkartenleser (102), der die Fähigkeit besitzt, mit einer Chipkarte (108) verbunden zu werden und mit mindestens zwei Geräten gleichzeitig verbunden zu werden; und
ein mobiles Gerät (104), das die Fähigkeit besitzt, für den Zugriff auf die Chipkarte (108) drahtlos mit dem Chipkartenleser (102) verbunden zu werden und Verbindungen des Chipkartenlesers (102) zu anderen Geräten (112) zu steuern.

6. Das System gemäß Anspruch 5, wobei das mobile Gerät (104) über eine Anzeige (114) verfügt und das mobile Gerät (104) zum Abfragen des Chipkartenlesers (102) bezüglich der Verbindungen und zum Benachrichtigen eines Benutzers des mobilen Geräts (104) über Änderungen der Verbindungen mittels der Anzeige (114) ausgelegt ist.

7. Das System gemäß Anspruch 6, wobei das mobile Gerät (104) zum Bereitstellen der Möglichkeit für den Benutzer ausgelegt ist, eine oder mehrere der Verbindungen abzubrechen.

8. Das System gemäß Anspruch 5, wobei das mobile Gerät (104) so ausgelegt ist, dass ein Benutzer des mobilen Geräts (104) die Möglichkeit hat, ein Authentisierungskennwort festzulegen, und das mobile Gerät so ausgelegt ist, dass es das Authentisierungskennwort sicher über eine drahtlose Verbindung an den Chipkartenleser (102) übertragen kann, und wobei der Chipkartenleser (102) so ausgelegt ist, dass er das Authentisierungskennwort von einem der anderen Geräte (112) anfordert, um eine Verbindung zwischen dem einen der anderen Geräte (112) und dem Chipkartenleser (102) erfolgreich herzustellen.

9. Ein mobiles Gerät (104), umfassend:
eine Kommunikationsschnittstelle (504), die mit einem Standard für die drahtlose Kommunikation kompatibel ist, mittels dessen das mobile Gerät (104) für den Zugriff auf eine Chipkarte (108) eine drahtlose Verbindung zu einem für die drahtlose Datenübertragung geeigneten Chipkartenleser (102) herstellen kann;
einen Prozessor (506); und
einen Speicher (508) zum Speichern von ausführbarem Code (509), der bei Ausführung durch den Prozessor (506) als Mittel zum Steuern von Verbindungen des Chipkartenlesers (102) zu anderen Geräten (112) ausgelegt ist.

10. Das mobile Gerät (104) gemäß Anspruch 9, weiter umfassend:
eine Anzeige (114),
wobei der ausführbare Code (509) als Mittel bei Ausführung durch den Prozessor (506) den Chipkartenleser (102) bezüglich der Verbindungen abfragt und einen Benutzer des mobilen Geräts (104) mittels der Anzeige (114) über Änderungen der Verbindungen benachrichtigt.

11. Das mobile Gerät gemäß Anspruch 10, wobei der ausführbare Code (509) als Mittel bei Ausführung durch den Prozessor (506) dem Benutzer die Möglichkeit gibt, eine oder mehrere der Verbindungen abzubrechen.

12. Das mobile Gerät gemäß jedem der Ansprüche 9 bis 11, weiter umfassend:
eine Eingabekomponente (116),
wobei der ausführbare Code (509) als Mittel bei Ausführung durch den Prozessor (506) einem Benutzer des mobilen Geräts (104) die Möglichkeit gibt, über die Eingabekomponente (116) ein Authentisierungskennwort für die Verbindungen zum Chipkartenleser (102) festzulegen, und das Authentisierungskennwort sicher über die Kommunikationsschnittstelle (504) an den Chipkartenleser (102) überträgt.

13. Das mobile Gerät (104) gemäß jedem der Ansprüche 9 bis 12, wobei der Standard für die drahtlose Kommunikation der Bluetooth®-Standard ist.

14. Ein maschinell lesbares Medium (508), das Programmcode als Mittel enthält, das bei Ausführung durch einen Prozessor (506) des mobilen Geräts (104) gemäß jedem der Ansprüche 9 bis 13 das mobile Gerät veranlasst, das Verfahren gemäß jedem der Ansprüche 1 bis 4 durchzuführen.

## Revendications

1. Un procédé consistant à :
contrôler, à l'aide d'un dispositif mobile (104) connecté sans fil à un lecteur de carte à puce (102), équipé pour le sans fil, afin d'accéder à une carte à puce (108), les connexions dudit lecteur de carte à puce (102) avec d'autres dispositifs (112).

2. Le procédé de la revendication 1, dans lequel le contrôle desdites connexions consiste à :
interroger ledit lecteur de carte à puce (102) à propos desdites connexions ; et
notifier un utilisateur dudit dispositif mobile (104) des modifications desdites connexions.

3. Le procédé de la revendication 2, consistant en outre à :
permettre audit utilisateur d'annuler une ou plusieurs desdites connexions.

4. Le procédé de l'une quelconque des revendications 1 à 3, dans lequel le contrôle desdites connexions consiste à :
permettre à un utilisateur dudit dispositif mobile (104) d'établir un mot de passe d'autorisation ;
transmettre sans fil, en toute sécurité, ledit mot de passe d'autorisation depuis ledit dispositif mobile (104) vers ledit lecteur de carte à puce (102) ; et
exiger dudit lecteur de carte à puce (102) la réception dudit mot de passe d'autorisation provenant de l'un desdits autres dispositifs (112) en vue d'établir avec succès une connexion entre l'un desdits autres dispositifs (112) et ledit lecteur de carte à puce (102).

5. Un système comportant :
un lecteur de carte à puce (102), équipé pour le sans fil, pouvant être accouplé à une carte à puce (108) et être connecté simultanément à au moins deux dispositifs ; et
un dispositif mobile (104) pouvant être connecté sans fil audit lecteur de carte à puce (102) afin d'accéder à ladite carte à puce (108) et pouvant contrôler les connexions dudit lecteur de carte à puce (102) à d'autres dispositifs (112).

6. Le système de la revendication 5, dans lequel ledit dispositif mobile (104) possède un écran (114), et ledit dispositif mobile (104) est adapté pour interroger ledit lecteur de carte à puce (102) à propos desdites connexions et pour notifier un utilisateur dudit dispositif mobile (104) via ledit écran (114) des modifications desdites connexions.

7. Le système de la revendication 6, dans lequel ledit dispositif mobile (104) est adapté pour permettre audit utilisateur d'annuler une ou plusieurs desdites connexions.

8. Le système de la revendication 5, dans lequel ledit dispositif mobile (104) est adapté pour permettre à l'utilisateur dudit dispositif mobile (104) d'établir un mot de passe d'autorisation et adapté pour transmettre sans fil, en toute sécurité, ledit mot de passe d'autorisation audit lecteur de carte à puce (102), et dans lequel ledit lecteur de carte à puce (102) est adapté pour exiger ledit mot de passe d'autorisation de l'un desdits autres dispositifs (112) afin d'établir avec succès une connexion entre l'un desdits autres dispositifs (112) et ledit lecteur de carte à puce (102).

9. Un dispositif mobile (104) comportant :
une interface de communication (504) compatible avec un standard de communication sans fil grâce à laquelle ledit dispositif mobile (104) peut se connecter sans fil à un lecteur de carte à puce (102), équipé pour le sans fil, afin d'accéder à une carte à puce (108) ;
un processeur (506) ; et
une mémoire (508) pour stocker un moyen de codage exécutable (509) qui, lorsqu'il est exécuté par ledit processeur (506), est adapté pour contrôler les connexions dudit lecteur de carte à puce (102) à d'autres dispositifs (112).

10. Le dispositif mobile (104) de la revendication 9, comportant en outre :
un écran (114),
dans lequel ledit moyen de codage exécutable (509), lorsqu'il est exécuté par ledit processeur (506), interroge ledit lecteur de carte à puce (102) à propos desdites connexions et notifie un utilisateur dudit dispositif mobile (104) via ledit écran (114) des modifications desdites connexions.

11. Le dispositif mobile de la revendication 10, dans lequel ledit moyen de codage exécutable (509), lorsqu'il est exécuté par ledit processeur (506), permet audit utilisateur d'annuler une ou plusieurs desdites connexions.

12. Le dispositif mobile (104) de l'une quelconque des revendications 9 à 11, comportant en outre :
un composant d'entrée (116),
dans lequel ledit moyen de codage exécutable (509), lorsqu'il est exécuté par ledit processeur (506), permet à un utilisateur dudit dispositif mobile (104) d'établir un mot de passe d'autorisation via ledit composant d'entrée (116) pour lesdites connexions audit lecteur de carte à puce (102) et transmet de façon sécurisée ledit mot de passe d'autorisation audit lecteur de carte à puce (102) via ladite interface de communication (504).

13. Le dispositif mobile (104) de l'une quelconque des revendications 9 à 12, dans lequel ledit standard de communication sans fil est le standard Bluetooth®.

14. Un support lisible par machine (508) comportant un moyen de codage de programme qui, lorsqu'il est exécuté par un processeur (506) du dispositif mobile (104) de l'une quelconque des revendications 9 à 13, permet audit dispositif mobile d'accomplir le procédé de l'une quelconque des revendications 1 à 4.
